# EUROPEAN PATENT SPECIFICATION

(11) **EP 4 436 516 B1**
(45) Date of publication and mention of the grant of the patent: **11.06.2025**
(21) Application number: 22813446.6
(22) Date of filing: 01.11.2022
(51) Int. Cl.: A61C 17/22, A61C 17/34

(54) **MOUTHPIECE ASSEMBLY FOR TOOTH CLEANING WITH DEFINED VERTICAL MOVEMENT**
MUNDSTÜCKANORDNUNG ZUR ZAHNREINIGUNG MIT DEFINIERTER VERTIKALER BEWEGUNG
ENSEMBLE EMBOUT BUCCAL DE NETTOYAGE DENTAIRE À MOUVEMENT VERTICAL DÉFINI

(30) Priority: 22.11.2021 US 202163281778 P
(43) Date of publication of application: 02.10.2024
(73) Proprietor: Koninklijke Philips N.V., 5656 AG Eindhoven (NL)
(72) Inventor: DE VRIES, Alwin William, 5656 AG Eindhoven (NL); PETRELLI, Marcus Cornelis, 5656 AG Eindhoven (NL)
(74) Representative: Philips Intellectual Property & Standards
(86) International application number: PCT/EP2022/080396
(87) International publication number: WO 2023/088676

(56) References cited:
- US-A1- 2010 062 397
- US-A1- 2019 336 257
- US-A1- 2020 138 180

## Description

### FIELD OF THE INVENTION

The present disclosure relates generally to mouthpieces used for oral care applications and more specifically concerns mouthpiece assemblies for tooth cleaning wherein an upper mouthpiece and a lower mouthpiece have a defined vertical movement relative to a static arrangement.

### BACKGROUND

Mouthpieces that provide partial or whole mouth tooth cleaning are becoming more common. To provide effective cleaning, such mouthpiece may have a mechanical driving mechanism located between an upper part of a mouthpiece and a lower part of the mouthpiece. If one of these parts experiences higher friction than the other one, one part may become a fixed part, leaving only one moving part. In that case, only the moving part provides a cleaning action to the teeth, leaving the other part of the teeth uncleaned.

Another issue with using mouthpieces for tooth cleaning is that the user may apply forces on the driving mechanism, for example by biting on the mouthpiece, such that movement of one or more parts of the mouthpiece is stalled. In that case, there is no cleaning action at all.

US2010062397 describes advanced powered toothbrush systems that enhance bristle positioning and contact with teeth, using pneumatic pressure and suction for efficient brushing, while adaptable brush head designs ensure comprehensive coverage and effective engagement with various dental shapes and malocclusions, simulating the Modified Bass Method of brushing.

### SUMMARY

The invention is as defined in the appended claims.

There is a need for improved power toothbrushes and mouthpiece assemblies that provide effective cleaning action. Accordingly, it is an objective of this disclosure to provide mouthpiece assemblies that include a static arrangement which forms a base for vertical movement of the upper and lower mouthpieces. The static arrangement can be created by providing a bite block between the upper and lower mouthpieces which forms a stationary portion together with the dental arches when the user bites on the bite block.

According to the implementations and embodiments described herein addressing such a need, a mouthpiece assembly for cleaning teeth includes an upper mouthpiece, a lower mouthpiece, a bite block, and a driving mechanism. The upper mouthpiece is configured to receive a first set of teeth from the maxillary dental arch of a user and for simultaneously cleaning multiple tooth surfaces of the first set of teeth, and includes an upper channel having two opposite vertical upper walls adapted to extend along side surfaces of the first set of teeth and a central upper wall in between facing horizontal surfaces of the first set of teeth. The lower mouthpiece is configured to receive a second set of teeth from the mandibular dental arch of the user and for simultaneously cleaning multiple tooth surfaces of the second set of teeth, and includes a lower channel having two opposite vertical lower walls adapted to extend along side surfaces of the second set of teeth and a central lower wall in between facing horizontal surfaces of the second set of teeth. The bite block is housed between the upper mouthpiece and the lower mouthpiece and includes a vertical block section having an upper end extending freely through a first opening in the central upper wall and configured to engage at least one tooth of the first set of teeth, and a lower end extending freely through a second opening in the central lower wall and configured to engage at least one tooth of the second set of teeth. The driving mechanism drives movement of the upper mouthpiece and the lower mouthpiece to clean the tooth surfaces. The bite block, the at least one tooth of the first set of teeth, and the at least one tooth of the second set of teeth create a static arrangement relative to movement of the upper mouthpiece and the lower mouthpiece when the user bites on the bite block. Movement of the upper mouthpiece and the lower mouthpiece driven by the driving mechanism is uninhibited when the user bites on the bite block.

In some embodiments, the upper mouthpiece and/or the lower mouthpiece have bristles for cleaning tooth surfaces. In some embodiments, the driving mechanism can be activated sequentially to provide alternating action to the upper mouthpiece and the lower mouthpiece. In other embodiments, the bite block further includes a lingual partition element and a facial partition element each protruding orthogonally from the bite block in opposite lateral directions. In further embodiments, the driving mechanism may include four inflatable bladders housed between the bite block, the upper mouthpiece, and the lower mouthpiece.

In some implementations, a mouthpiece assembly for cleaning teeth, includes a plurality of mouthpiece segments, each mouthpiece segment including an upper mouthpiece and a lower mouthpiece as described above, a hingeable element, a bite block, and a driving mechanism. The hingeable element is operatively coupled to the plurality of mouthpiece segments and configured to permit hinging movement between at least two of the plurality of mouthpiece segments allowing the upper mouthpiece and the lower mouthpiece to adapt to curvature of the dental arch. The bite block is housed between the upper mouthpiece and the lower mouthpiece and includes a vertical block section having an upper end extending freely through a first opening in the central upper wall and configured to engage at least one tooth of the first set of teeth, and a lower end extending freely through a second opening in the central lower wall and configured to engage at least one tooth of the second set of teeth. The driving mechanism drives movement of the upper mouthpiece and the lower mouthpiece to clean the tooth surfaces. The bite block, the at least one tooth of the first set of teeth, and the at least one tooth of the second set of teeth create a static arrangement relative to movement of the upper mouthpiece and the lower mouthpiece when the user bites on the bite block, and wherein movement of the upper mouthpiece and the lower mouthpiece driven by the driving mechanism is uninhibited when the user bites on the bite block.

In some embodiments, the hingeable element is functionally incorporated into the bite block. In some embodiments, the bite block includes a lingual partition element and a facial partition element each protruding orthogonally from the bite block in opposite lateral directions. In other embodiments, a divider element extends lengthwise from the lingual partition element and the facial partition element of the bite block between the upper mouthpiece and the lower mouthpiece. In some embodiments, the driving mechanism includes four inflatable bladders housed between the bite block, the upper mouthpiece, and the lower mouthpiece. In some embodiments, the plurality of mouthpiece segments includes three segments coupled via two hingeable elements. In further embodiments, the upper mouthpiece and/or the lower mouthpiece further comprise bristles for cleaning tooth surfaces.

In some implementations, a power toothbrush includes a handle portion and a brush head coupled to the handle portion, the brush head including a mouthpiece assembly as recited above. In some embodiments, the plurality of mouthpiece segments includes at least two segments coupled via a hingeable element. In other embodiments, the handle is coupled to one of the at least two mouthpiece segments. In further embodiments, the upper mouthpiece and/or the lower mouthpiece further comprise bristles for cleaning tooth surfaces.

One advantage of the assemblies and devices described herein is that a complete teeth set or at least a section of teeth can be provided with the same cleaning action. Another advantage is that the user can bite as hard as they want, the movement of the upper and lower parts of the mouthpiece will not be blocked. As a result, the power toothbrush functions more consistently and is more effective in reaching the desired cleaning result.

These and other aspects of the disclosure will be apparent from and elucidated with reference to the embodiment(s) described hereinafter.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the inventive subject matter.
FIG. 1 is a simplified top view in a horizontal plane of a first embodiment of a mouthpiece assembly as implemented in a power toothbrush.
FIG. 2 is a cross-sectional view in a vertical plane along line A-A of the mouthpiece assembly shown in FIG. 1.
FIG. 3 is a cross-sectional view in a vertical plane along line B-B of a variation of the embodiment of the mouthpiece assembly shown in FIG. 1.
FIG. 4 is a simplified top view in a horizontal plane of another embodiment of a mouthpiece assembly including three segments superimposed on a maxillary dental arch.
FIG. 5 is a cross-sectional view in a vertical plane along line A-A of the mouthpiece assembly shown in FIG. 4.
FIG. 6 is a cross-sectional view in a vertical plane along line B-B of the mouthpiece assembly shown in FIG. 4.

### DETAILED DESCRIPTION OF EMBODIMENTS

The disclosed subject matter will become better understood through review of the following detailed description in conjunction with the figures. The detailed description and figures provide example embodiments of the invention described herein. Those skilled in the art will understand that the disclosed examples may be varied, modified, and altered without departing from the scope of the invention described herein. The present invention may take form in various components and arrangements of components, and in various techniques, methods, or procedures and arrangements of steps. The referenced drawings are only for the purpose of illustrated embodiments and are not to be construed as limiting the present invention. Various inventive features are described below that can each be used independently of one another or in combination with other features.

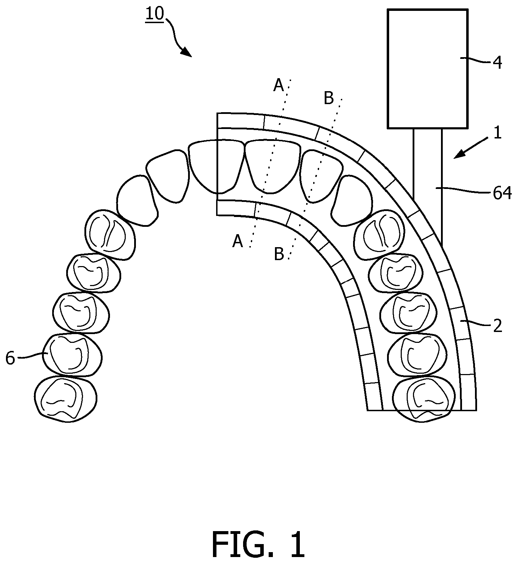

FIGs. 1-3 illustrate a first embodiment of a mouthpiece assembly 10 as it is positioned in the mouth of a user. Mouthpiece assembly 10 can be incorporated in a brush head 2 of a power toothbrush 1. For example, brush head 2 can be a J-shaped toothbrush cleaning several teeth of one side of a dental arch 6 at the same time. FIG. 1 shows mouthpiece assembly as a single continuously curved structure following the curvature of dental arch 6. In other embodiments, a mouthpiece assembly as described herein can be implemented in a U-shaped tooth cleaning device. In yet further embodiments, a mouthpiece assembly may consist of several mouthpiece segments, as discussed further below.

Mouthpiece assembly 10 includes an upper mouthpiece 12 and a lower mouthpiece 16. The terms "upper mouthpiece" and "lower mouthpiece" are used in reference to the embodiment shown in the figures. It is understood that for J-shaped toothbrushes, an assembly can be used in mirror image on the other side of the mouth whereby upper and lower mouthpieces are reversed. In some embodiments, a mouthpiece or a segment thereof can be configured to clean a complete set of teeth or a partial set of teeth, or even a single tooth, and as used herein, a set of teeth may refer to multiple teeth of either upper or lower jaws, or a single tooth.

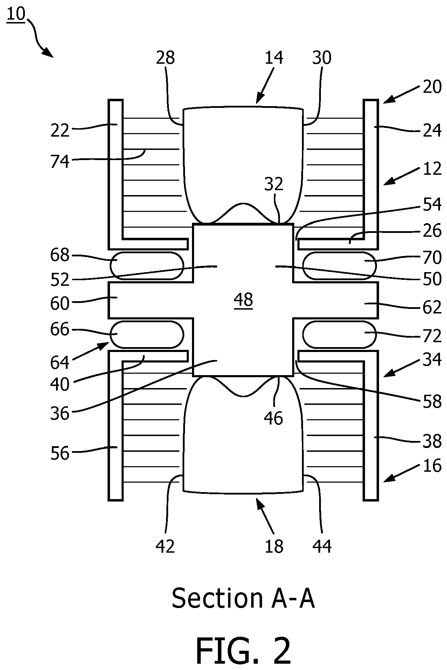

As shown in FIG. 2, upper mouthpiece 12 is configured for receiving a first set of teeth 14 from the maxillary dental arch of the user. Upper mouthpiece 12 includes an upper channel 20 having two opposite vertical upper walls 22, 24 with a central upper wall 26 in between. Two opposite vertical upper walls 22, 24 each extend along side surfaces 28, 30 of first set of teeth 18. Central upper wall 26 faces a horizontal surface 32 of first set of teeth 18. Lower mouthpiece 16 is configured for receiving a second set of teeth 18 from the mandibular dental arch of the user. Lower mouthpiece 16 includes a lower channel 34 having two opposite vertical lower walls 36, 38 and a central lower wall 40. Two opposite vertical walls 36, 38 each extend along side surfaces 42, 44 of second set of teeth 18. Central lower wall 40 faces a horizontal surface 46 of second set of teeth 18. A horizontal surface of a set of teeth refers to the biting or chewing surfaces of the teeth, in particular the incisal surface of an incisor or canine, and occlusal surface of a premolar or molar. A side surface of the teeth may refer to facial, lingual, mesial, or distal surfaces of a tooth.

Mouthpiece assembly 10 further includes a bite block 48 housed between upper mouthpiece 12 and lower mouthpiece 16. Bite block 48 has a vertical block section 50 with an upper end 52 extending freely through a first opening 54 in central upper wall 26. A lower end 56 extends freely through a second opening 58 in central lower wall 40. Bite block 26 is configured to engage at least one tooth of first set of teeth 14 and at least one tooth of the second set of teeth 18. A lingual partition element 60 and a facial partition element 62 protrude orthogonally from bite block 26 in opposite lateral directions. Bite block 48 is dimensioned to provide a biting surface to the upper first set of teeth 14 and to the lower second set of teeth 18. Because bite block 48 extends freely through first opening 54 and second opening 58, upper mouthpiece 12 and lower mouthpiece 14 can move freely relative to bite block 48.

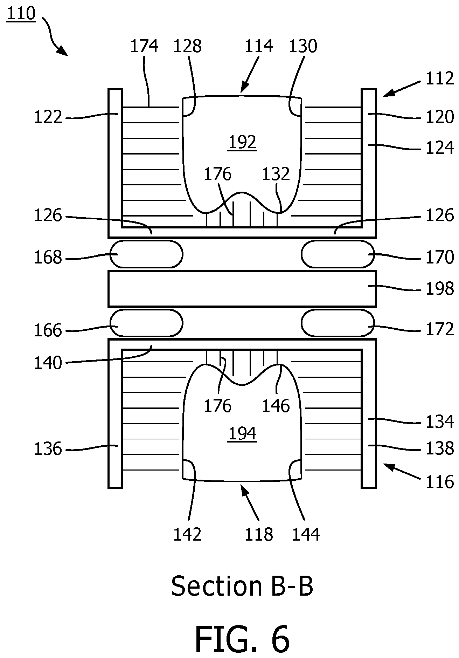

In some embodiments, bite block 48 can be a continuous, solid piece running along the length of the entire mouthpiece. In other embodiments, the number of bite blocks can vary. In further embodiments, a bite block can be provided at a single position of the molars or frontal teeth and extend into a divider element as discussed below with reference to FIG. 6. In some embodiments, one bite block may be sufficient to create the desired vertical distance between the upper and lower dental arch. In yet further embodiments, three or more bite blocks may be used to compensate for possible gaps in the dental arch.

A driving mechanism 64 drives tooth cleaning movement of upper mouthpiece 12 and lower mouthpiece 16. In the embodiment shown in FIGs. 1-2, driving mechanism 64 includes four inflatable bladders 66, 68, 70, and 72 disposed between upper mouthpiece 12 and lower mouthpiece 16. Inflatable bladders 66, 68, 70, and 72 are arranged to extend through four quadrants formed between lateral extensions of bite block 48 and upper mouthpiece 12 and lower mouthpiece 16. In particular, inflatable bladder 66 extends between lingual partition element 60 and central lower wall 40 of lower mouthpiece 16; inflatable bladder 68 extends between lingual partition element 60 and central upper wall 26 of upper mouthpiece 12; inflatable bladder 70 extends between facial partition element 62 and central upper wall 26 of upper mouthpiece 12; and inflatable bladder 72 extends between facial partition element 62 and central lower wall 40 of lower mouthpiece 16. Beyond bite block 48, for example at section B-B, inflatable bladders 66, 68, 70, and 72 can continue in this configuration and extend as four tubular structures between upper channel 20 and lower channel 34 separated horizontally by a divider element, for example similar to the configuration shown in FIG. 6.

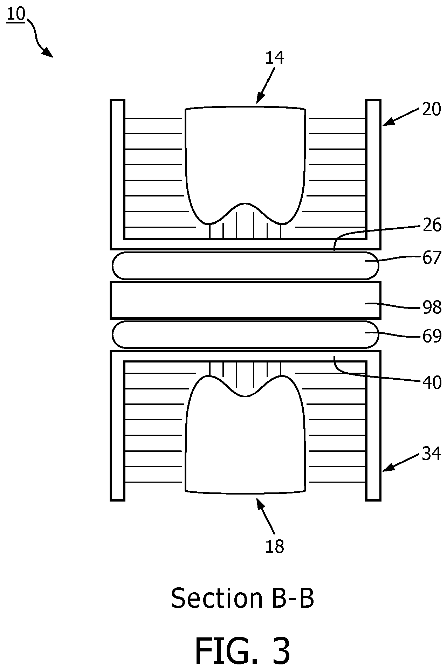

FIG. 3 illustrates a variation of the first embodiment of mouthpiece assembly 10 wherein, beyond bite block 48, for example along cross-section B-B, bladders 68 and 70 merge into a single upper bladder 67, and bladders 66 and 72 merge into a single lower bladder 69. A horizontal divider element 98 can run parallel to central upper wall 26 of upper channel 20 and central lower wall of 40 of lower channel 34 and separate bladders 67 and 69. Divider element 98 can extend from one bite block 48 merging lingual partition element 60 and facial partition element 62 into continuous divider element 98.

Bladders 68 and 70 can be coupled to upper channel 20 and bladders 66 and 72 can be coupled to lower channel 34, for example, via clamping in a mechanical manner of bonding by way of glue or melting materials. In some embodiments, upper mouthpiece 12 and lower mouthpieces 16 may be connected through bladders 66, 68, 70, and 72 to bite block 48. In other embodiments, the upper and lower mouthpieces can be coupled to the bite block or support structure via a spring like construction.

Bladders 66, 68, 70, and 72 can be inflated/deflated to create the vertical movement of the upper and lower mouthpieces. Bladders 66, 68, 70, and 72 can be in fluid communication with a pneumatic device, such as pneumatic pump that provides pressure to inflate the bladder and suction to deflate the bladder. In some embodiments, a pneumatic pump may be located in the handle and coupled to one of the segments. In other embodiments, the number of bladders used to drive movement of the mouthpieces can vary. In further embodiments, any suitable kind of driving mechanism may be used.

The cleaning of tooth surfaces can be performed by bristles 74. Bristles 74 are mounted on vertical walls 22, 24 of upper channel 20 and on vertical walls 36, 38 of lower channel 34. When driving mechanism 64 successively inflates and deflates bladders 68, 70, upper mouthpiece 12 is pushed upward and pulled downward. Similarly, when bladders 66 and 72 inflate and deflate, lower mouthpiece 16 moves vertically up and down. The vertical movement allows bristles 74 to produce a cleaning action on the side surfaces of the teeth. In other embodiments, the upper and lower mouthpieces may be provided with any kind of suitable cleansing elements that produce a scrubbing action when the appliance is activated.

Bite block 48, first set of teeth 14, and second set of teeth 18 create a static arrangement, or fixed world, relative to movement of upper mouthpiece 12 and lower mouthpiece 16 when the user bites on bite block 48. The biting does not interfere with an operation of the driving mechanism and cleaning action provided by the upper mouthpiece and lower mouthpiece. The inflation/deflation of bladders 66, 68, 70, and 72 causes upper and lower mouthpieces to move relative to the static arrangement of the bite block and teeth, and thus causes bristles to move in an upward and downward motion along the multiple tooth surfaces of the first and second set of teeth. Because bite block 48 extends freely through first opening 54 of upper channel 20 and second opening 58 of lower channel 34, there is no friction between upper mouthpiece 12 and lower mouthpieces 16 and bite block 48 when the mouthpiece assembly is activated. Vertical movement of upper mouthpiece 12 and lower mouthpiece 16 is uninhibited ensuring an equally effective cleaning result for the complete dental arch regardless of the biting force applied by the user. The fixed world created in the mouth is the base for the upper and lower vertical movement of the mouthpiece. When excessive bite forces are applied, the bite forces are applied only to the biting block and the movement of the upper and lower part of the mouthpiece is not hampered. The static arrangement of bite block 48, first set of teeth 14, and second set of teeth 18 ensures a defined vertical movement of both the upper mouthpiece as well as the lower mouthpiece relative to the teeth and bite block 48.

In some embodiments, components of the driving mechanism can be activated sequentially to provide alternating action to the upper mouthpiece and the lower mouthpiece resulting in less air movement. In other embodiments, components of the driving mechanism can be activated simultaneously. In some embodiments, the desired vertical movement of upper and lower mouthpieces can be accomplished via two bladders that split at the position of the bite block. In further embodiments, the upper mouthpiece and lower mouthpiece may be mechanically coupled, reducing the number of drivers.

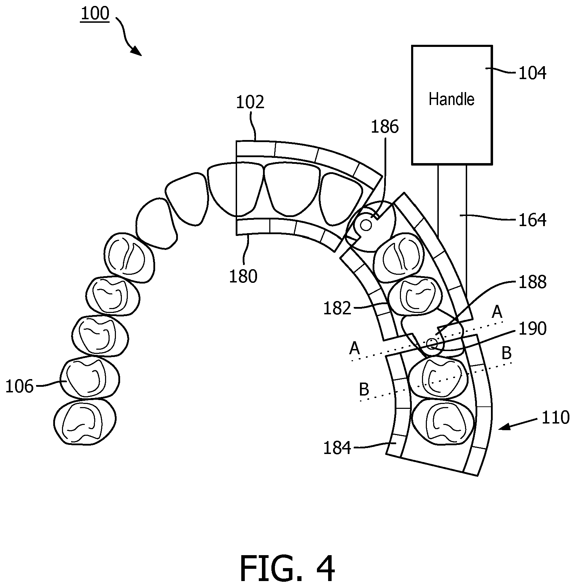

FIGs. 4-6 illustrate an embodiment of a mouthpiece assembly 110 divided in three mouthpiece segments 180, 182, and 184 that are incorporated in a power toothbrush 100 having a brush head 102 coupled to a handle portion 104. Brush head 102 has a J-shaped configuration.

Each mouthpiece segment 180, 182, 184 includes an upper mouthpiece 112 and a lower mouthpiece 116. Mouthpiece segment 180 and mouthpiece segment 182 are coupled via a first hingeable bite block 186. Mouthpiece segment 182 and mouthpiece segment 184 are coupled via a second hingeable bite block 188. Hingeable bite blocks 186, 188 provide pivotal movement between segments 180, 182, and 184 thereby allowing the upper and lower mouthpieces to adjust to a dental arch 106 of the user. In some embodiments, mouthpiece segments 180, 182, and 184 can move independently of each other in a vertical direction.

In other embodiments, the number of mouthpiece segments and the number of hingeable bite blocks can vary. Additionally, mouthpiece segments can be adapted to receive different sets of teeth or a singular tooth, and hingeable bite blocks can be configured to receive any tooth or a set of teeth.

In the embodiment shown in FIGs. 4-6, a hingeable element 178 is incorporated into each one of bite blocks 186, 188. In other embodiments, hingeable components may be separate from bite block components. For example, a hingeable element can be a separate, distinct part provided at one location and a bite block can be provided at another location. In such an embodiment, hingeable elements can provide for the pivotal movement between mouthpiece segments. Bite blocks may be located at one or more locations along the mouthpiece assembly different from the locations of the hingeable elements.

As shown in FIG. 4, handle portion 104 is coupled to middle segment 182. However, in other embodiments, a handle portion can be coupled to the mouthpiece assembly at any suitable location. Handle portion 104 may include a power switch to turn power on or off, components of a driving mechanism, such as the pump battery, and other functional components of the power toothbrush.

Mouthpiece segment 180 is configured to receive a front part of the upper and lower dental arches of the user including at least two incisors of the upper and lower jaws at the front of the mouth. Mouthpiece segment 182 is adapted to receive a part of the dental arch including at least two premolars of the upper and lower jaws. Mouthpiece segment 184 is adapted to receive a part of the dental arch including at least the second and third molars of the upper and lower jaws. First hingeable bite block 186 provides fixed contact with the teeth and is positioned to receive canine teeth of upper and lower jaws. Second hingeable bite block 188 also provides fixed contact with the teeth and is positioned to receive first molars of upper and lower jaws. However, during use, when a user repositions mouthpiece 180, mouthpiece segments 180, 182, and 184 can move in the mouth and the teeth accommodated by first bite block 186 and second bite block 188 may shift.

In each segment, upper mouthpiece 112 includes an upper channel 120 having two opposite vertical upper walls 122, 124. Vertical upper walls 122 and 124 are adapted to extend along side surfaces 128, 130, respectively, of first set of teeth 114. A central upper wall 126 connects vertical upper wall 122 and 124. Portions of central upper wall 126 are configured to face horizontal surface 132 of first set of teeth 114.

Similarly, in each segment, lower mouthpiece 116 includes a lower channel 134 having two opposite vertical lower walls 136, 138. Vertical lower walls 136 and 138 are adapted to extend along side surfaces 142, 144, respectively, of second set of teeth 118. A central lower wall 140 connects vertical lower walls 136 and 138. Portions of central lower wall 140 face horizontal surface 146 of second set of teeth 118.

In other embodiments, upper channel 120 and lower channel 134 may form individual brushing chambers to brush individual teeth. In further embodiments, upper and lower channels can be configured to accommodate and brush multiple teeth at the same time.

In the example embodiment described herein, hingeable bite blocks 186 and 188 have similar structural components. Those similar components are hereafter described with reference to hingeable bite block 188 but can equally be present in hingeable bite block 186. In other embodiments, distinct hingeable bite blocks may include different structural components.

Hingeable bite block 188 includes a vertical block section 150 and a horizontal block section 151, which are positioned substantially orthogonal to each other. In a vertical cross-section, vertical block section 150 is shown as an elongated element sized to fit in the mouth of a user. Vertical block section 150 has an upper end 152 extending freely through a first opening 154 in central upper wall 126 and a lower end 156 extending freely through a second opening 158 in central lower wall 126. In a horizontal cross-section, vertical block section 150 may have an elliptical shape or other suitable curved shape with a variable radius. Upper end 152 has a top surface 153 configured to engage with an occlusal portion of at least one tooth of first set of teeth 114. Lower end 156 has a bottom surface configured to engage with an occlusal portion of at least one tooth of second set of teeth 118. For example, top surface 153 can be adapted to receive first molar 192 of the upper jaw and bottom surface 157 can be adapted to receive first molar 194 of the lower jaw. Similarly, hingeable bite block 186 has a top surface of its vertical block section adapted to receive a canine of the upper jaw and a bottom surface of its vertical block section adapted to receive a canine of the lower jaw.

A hinge pin 190 is operatively disposed in vertical block section 150 thereby providing for a pivotal connection between mouthpiece segments 182 and 184. Hinge pin 190 extends in a longitudinal direction of hingeable bite block 188. Similarly, a hinge pin can be operatively disposed in a vertical block section of bite block 186 permitting hinging movement between mouthpiece segments 180 and 182. Hinge pins can be made of plastic, metal, or any other suitable material.

Hingeable bite blocks 186 and 188 can include a teeth contact area made of silicone material so as to permit the user to firmly grip hingeable bite blocks 186, 188 with their teeth. In other embodiments, bite blocks can be made of other suitable materials that are sufficiently rigid to withstand compression of the user's bite.

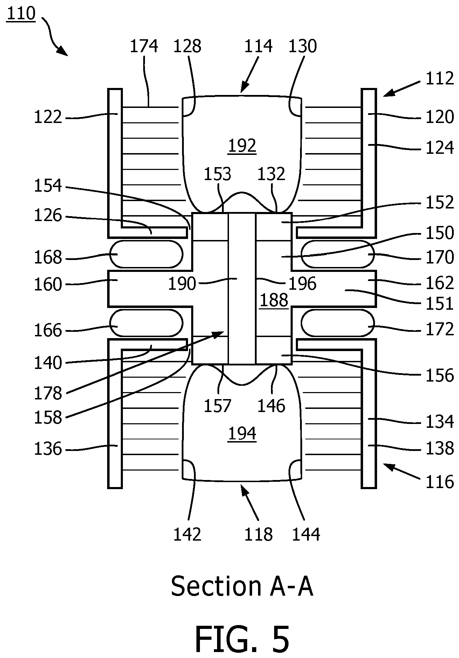

FIG. 5 shows a cross-sectional view of section A-A indicated in FIG. 4. As can be seen, horizontal block section 151 includes a lingual partition element 160 and a facial partition element 162, each protruding orthogonally from hingeable bite block 188 in opposite lateral directions.

FIG. 6 shows a cross-sectional view of section B-B of FIG. 4. As can be seen in FIG. 6, a horizontal divider element 198 runs parallel to central upper wall 126 of upper channel 120 and central lower wall of 140 of lower channel 134. For example, divider element 198 can extend from hingeable bite block 188 merging lingual partition element 160 and facial partition element 162 into continuous divider element 198.

Driving mechanism 164 drives movement of upper mouthpiece 112 and lower mouthpiece 116. Hingeable bite block 188, the at least one tooth of the first set of teeth 114, and the at least one tooth of the second set of teeth 118 create a static arrangement relative to movement of the upper mouthpiece and the lower mouthpiece when the user bites on the hingeable bite block. Movement of upper mouthpiece 112 and lower mouthpiece 116, driven by driving mechanism 164, is uninhibited when the user bites on hingeable bite blocks 186 and 188.

Driving mechanism 164 includes four elongated inflatable bladders 166, 168, 170 and 172 arranged to extend through four quadrants formed between hingeable bite block 188, upper mouthpiece 112, and lower mouthpiece 116. Inflatable bladder 166 extends between lingual partition element 160 and central lower wall 140 of lower mouthpiece 116. Inflatable bladder 168 extends between lingual partition element 160 and central upper wall 126 of upper mouthpiece 112. Inflatable bladder 170 extends between facial partition element 162 and central upper wall 126 of upper mouthpiece 112. Inflatable bladder 172 extends between facial partition element 162 and central lower wall 140 of lower mouthpiece 116. In between bite blocks 186 and 188, inflatable bladders 166, 168, 170 and 172 extend lengthwise between upper mouthpiece 112 and horizontal divider element 198, and between lower mouthpiece 116 and horizontal divider element 198. In between segments, a hose type connection flexible enough to follow the motion of the individual segment can be used.

Driving mechanism 164 may include a pneumatic pump and motor or other drive system for moving upper mouthpiece 112 and lower mouthpiece 116 up and down to produce a scrubbing action on the teeth. Bladders 166, 168, 170, and 172 can be alternately inflated and deflated to produce the desired cleansing action. The drive train assembly can be located exterior to the mouth, for example in the handle.

Bristles 174, extending horizontally, are coupled to vertical walls 122, 124 of upper channel 120 and on vertical walls 136, 138 of lower channel 134. In other embodiments, other cleaning members may be coupled to the vertical walls of the upper and lower channels. Furthermore, vertically extending bristles 176 can be mounted on central upper wall 126 and on central lower wall 140 in sections of the channels between hingeable bite blocks 186 and 188. Bristles 174 can clean the chewing surfaces by a tapping motion and by the movement of the user.

In operation, mouthpiece assembly 110 is inserted into the mouth of a user. The pivotal connections between segments 180, 182, 184 allows the mouthpiece assembly to conform to the dental arches of the user. When the mouthpiece is in place, the user can bite down on hingeable bite blocks 186 and 188, thereby providing a stable position of the assembly in the mouth. Upper mouthpiece 112 and lower mouthpiece 116 are free to move up and down and do so when driving mechanism 164 is activated to produce the desired cleaning, by scrubbing or other means. Bite blocks 186 and 188 do not move relative to upper mouthpiece 112 and lower mouthpiece 116 when the driving mechanism is activated and form a fixed arrangement relative to movement of the upper mouthpiece and the lower mouthpiece when the user bites on the bite blocks. Movement of the driving mechanism is uninhibited.

Although the invention has been described in detail for the purpose of illustration based on what is currently considered to be the most practical and preferred embodiments, it is to be understood that such detail is solely for that purpose and that the invention is not limited to the disclosed embodiments, but, on the contrary, is intended to cover modifications and equivalent arrangements that are within the scope of the appended claims. For example, it is to be understood that the present invention contemplates that, to the extent possible, one or more features of any embodiment can be combined with one or more features of any other embodiment.

All definitions, as defined and used herein, should be understood to control over dictionary definitions and/or ordinary meanings of the defined terms.

The indefinite articles "a" and "an," as used herein in the specification and in the claims, unless clearly indicated to the contrary, should be understood to mean "at least one." In addition, singular references do not exclude a plurality. Thus, references to "a", "an", "first", "second" etc. do not preclude a plurality.

Reference signs in the claims are provided merely as a clarifying example shall not be construed as limiting the scope of the claims in any way.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

## Claims

1. A mouthpiece assembly (10) for cleaning teeth, comprising:
an upper mouthpiece (12) for receiving a first set of teeth (14) from the maxillary dental arch of a user and for simultaneously cleaning multiple tooth surfaces of the first set of teeth (14), and including an upper channel (20) having two opposite vertical upper walls (22, 24) adapted to extend along side surfaces (28, 30) of the first set of teeth (14) and a central upper wall (26) in between facing horizontal surfaces (32) of the first set of teeth (14);
a lower mouthpiece (16) for receiving a second set of teeth (18) from the mandibular dental arch of the user and for simultaneously cleaning multiple tooth surfaces of the second set of teeth (18), and including a lower channel (34) having two opposite vertical lower walls (36, 38) adapted to extend along side surfaces (42, 44) of the second set of teeth (18) and a central lower wall (40) in between facing horizontal surfaces (46) of the second set of teeth (18);
a bite block (48) housed between the upper mouthpiece (12) and the lower mouthpiece (16) and including a vertical block section (50) having an upper end (52) extending freely through a first opening (54) in the central upper wall (26) and configured to engage at least one tooth of the first set of teeth (14), and a lower end (56) extending freely through a second opening (58) in the central lower wall (40) and configured to engage at least one tooth of the second set of teeth (18);
a driving mechanism (64) for driving movement of the upper mouthpiece (12) and the lower mouthpiece (16) to clean the tooth surfaces; and
wherein the bite block (48), the at least one tooth of the first set of teeth (14), and the at least one tooth of the second set of teeth (18) create a static arrangement relative to movement of the upper mouthpiece (12) and the lower mouthpiece (16) when the user bites on the bite block (48), and wherein movement of the upper mouthpiece (12) and the lower mouthpiece (16) driven by the driving mechanism (64) is uninhibited when the user bites on the bite block (48).

2. The mouthpiece assembly of claim 1, wherein the upper mouthpiece and/or the lower mouthpiece further comprise bristles (74) for cleaning tooth surfaces.

3. The mouthpiece assembly of claim 1, wherein the driving mechanism (64) can be activated sequentially to provide alternating action to the upper mouthpiece and the lower mouthpiece.

4. The mouthpiece assembly of claim 1, wherein the bite block (48) further comprises a lingual partition element (60) and a facial partition element (62) each protruding orthogonally from the bite block (48) in opposite lateral directions.

5. The mouthpiece assembly of claim 1, wherein the driving mechanism (64) includes four inflatable bladders (66, 68, 70, 72) housed between the bite block (48), the upper mouthpiece (12), and the lower mouthpiece (16).

6. The mouthpiece assembly of claim 1, further comprising:
a hingeable element (178) operatively coupled to the plurality of mouthpiece segments (180, 182, 184) and configured to permit hinging movement between at least two of the plurality of mouthpiece segments (180, 182, 184) allowing the upper mouthpiece (112) and the lower mouthpiece (116) to adapt to curvature of the dental arch.

7. The mouthpiece assembly of claim 6, wherein the hingeable element (178) is functionally incorporated into the bite block (186, 188).

8. The mouthpiece assembly of claim 7, wherein the bite block (186, 188) further comprises a lingual partition element (160) and a facial partition element (162) each protruding orthogonally from the bite block (186, 188) in opposite lateral directions.

9. The mouthpiece assembly of claim 7, further comprising a divider element (198) extending lengthwise from the lingual partition element (160) and the facial partition element (162) of the bite block (148) between the upper mouthpiece (112) and the lower mouthpiece (116).

10. The mouthpiece assembly of claim 7, wherein the driving mechanism (164) includes four inflatable bladders (166, 168, 170, 172) housed between the bite block (148), the upper mouthpiece (112), and the lower mouthpiece (116).

11. The mouthpiece assembly of claim 6, wherein the plurality of mouthpiece segments (180, 182, 184) includes three segments coupled via two hingeable elements.

12. The mouthpiece assembly of claim 6, wherein the upper mouthpiece and/or the lower mouthpiece further comprise bristles (174, 176) for cleaning tooth surfaces.

13. A power toothbrush (100), comprising:
a handle portion (104); and
a brush head (102) coupled to the handle portion (104), the brush head (102) including a mouthpiece assembly (110) as recited in claim 6.

14. The power toothbrush of claim 13, wherein the plurality of mouthpiece segments (180, 182, 184) includes at least two segments coupled via a hingeable element (178).

15. The power toothbrush of claim 13, wherein the handle (104) is coupled to one of the at least two mouthpiece segments.

16. The power toothbrush of claim 13, wherein the upper mouthpiece and/or the lower mouthpiece further comprise bristles (174, 176) for cleaning tooth surfaces.

## Patentansprüche

1. Mundstückanordnung (10) zum Reinigen von Zähnen, umfassend:
ein oberes Mundstück (12) zum Aufnehmen eines ersten Satzes von Zähnen (14) von dem Oberkieferzahnbogen eines Benutzers und zum gleichzeitigen Reinigen mehrerer Zahnflächen des ersten Satzes von Zähnen (14) und das einen oberen Kanal (20) einschließt, der zwei gegenüberliegende vertikale obere Wände (22, 24), die dazu eingerichtet sind, sich entlang von Seitenflächen (28, 30) des ersten Satzes von Zähnen (14) zu erstrecken, und eine zentrale oberen Wand (26) dazwischen, die horizontalen Flächen (32) des ersten Satzes von Zähnen (14) zugewandt ist, aufweist;
ein unteres Mundstück (16) zum Aufnehmen eines zweiten Satzes von Zähnen (18) von dem Unterkieferzahnbogen des Benutzers und zum gleichzeitigen Reinigen mehrerer Zahnflächen des zweiten Satzes von Zähnen (18) und das einen unteren Kanal (34) einschließt, der zwei gegenüberliegende vertikale untere Wände (36, 38), die dazu eingerichtet sind, sich entlang von Seitenflächen (42, 44) des zweiten Satzes von Zähnen (18) zu erstrecken, und eine zentrale untere Wand (40) dazwischen, die horizontalen Flächen (46) des zweiten Satzes von Zähnen (18) zugewandt ist, aufweist;
einen Beißblock (48), der zwischen dem oberen Mundstück (12) und dem unteren Mundstück (16) untergebracht ist und einen vertikalen Blockabschnitt (50) einschließt, der ein oberes Ende (52), das sich frei durch eine erste Öffnung (54) in der zentralen oberen Wand (26) erstreckt und dazu konfiguriert ist, mindestens einen Zahn des ersten Satzes von Zähnen (14) in Eingriff zu nehmen, und ein unteres Ende (56), das sich frei durch eine zweite Öffnung (58) in der zentralen unteren Wand (40) erstreckt und dazu konfiguriert ist, mindestens einen Zahn des zweiten Satzes von Zähnen (18) in Eingriff zu nehmen, aufweist;
einen Antriebsmechanismus (64) zum Antreiben einer Bewegung des oberen Mundstücks (12) und des unteren Mundstücks (16), um die Zahnflächen zu reinigen; und
wobei der Beißblock (48), der mindestens eine Zahn des ersten Satzes von Zähnen (14) und der mindestens eine Zahn des zweiten Satzes von Zähnen (18) eine statische Anordnung relativ zu einer Bewegung des oberen Mundstücks (12) und des unteren Mundstücks (16) erschaffen, wenn der Benutzer auf den Beißblock (48) beißt, und wobei eine durch den Antriebsmechanismus (64) angetriebene Bewegung des oberen Mundstücks (12) und des unteren Mundstücks (16) ungehemmt ist, wenn der Benutzer auf den Beißblock (48) beißt.

2. Mundstückanordnung nach Anspruch 1, wobei das obere Mundstück und/oder das untere Mundstück weiter Borsten (74) zum Reinigen von Zahnflächen umfassen.

3. Mundstückanordnung nach Anspruch 1, wobei der Antriebsmechanismus (64) sequentiell aktiviert werden kann, um eine abwechselnde Wirkung auf das obere Mundstück und das untere Mundstück bereitzustellen.

4. Mundstückanordnung nach Anspruch 1, wobei der Beißblock (48) weiter ein linguales Trennelement (60) und ein faziales Trennelement (62) umfasst, die jeweils orthogonal von dem Beißblock (48) in entgegengesetzte seitliche Richtungen hervorstehen.

5. Mundstückanordnung nach Anspruch 1, wobei der Antriebsmechanismus (64) vier aufblasbare Blasen (66, 68, 70, 72) einschließt, die zwischen dem Beißblock (48), dem oberen Mundstück (12) und dem unteren Mundstück (16) untergebracht sind.

6. Mundstückanordnung nach Anspruch 1, weiter umfassend:
ein klappbares Element (178), das mit der Vielzahl von Mundstücksegmenten (180, 182, 184) betrieblich verbunden ist und dazu konfiguriert ist, eine Klappbewegung zwischen mindestens zwei der Vielzahl von Mundstücksegmenten (180, 182, 184) zuzulassen, wodurch dem oberen Mundstück (112) und dem unteren Mundstück (116) ermöglicht ist, sich an eine Krümmung des Zahnbogens anzupassen.

7. Mundstückanordnung nach Anspruch 6, wobei das klappbare Element (178) funktionell in den Beißblock (186, 188) integriert ist.

8. Mundstückanordnung nach Anspruch 7, wobei der Beißblock (186, 188) weiter ein linguales Trennelement (160) und ein faziales Trennelement (162) umfasst, die jeweils orthogonal von dem Beißblock (186, 188) in entgegengesetzte seitliche Richtungen hervorstehen.

9. Mundstückanordnung nach Anspruch 7, weiter umfassend ein Teilungselement (198), das sich längsweise von dem lingualen Trennelement (160) und dem fazialen Trennelement (162) des Beißblocks (148) zwischen dem oberen Mundstück (112) und dem unteren Mundstück (116) erstreckt.

10. Mundstückanordnung nach Anspruch 7, wobei der Antriebsmechanismus (164) vier aufblasbare Blasen (166, 168, 170, 172) einschließt, die zwischen dem Beißblock (148), dem oberen Mundstück (112) und dem unteren Mundstück (116) untergebracht sind.

11. Mundstückanordnung nach Anspruch 6, wobei die Vielzahl von Mundstücksegmenten (180, 182,184) drei Segmente einschließt, die über zwei klappbare Elemente gekoppelt sind.

12. Mundstückanordnung nach Anspruch 6, wobei das obere Mundstück und/oder das untere Mundstück weiter Borsten (174, 176) zum Reinigen von Zahnflächen umfassen.

13. Elektrische Zahnbürste (100), umfassend:
einen Griffabschnitt (104); und
einen Bürstenkopf (102), der an den Griffabschnitt (104) gekoppelt ist, wobei der Bürstenkopf (102) eine Mundstückanordnung (110) gemäß Anspruch 6 einschließt.

14. Elektrische Zahnbürste nach Anspruch 13, wobei die Vielzahl von Mundstücksegmenten (180, 182,184) mindestens zwei Segmente einschließt, die über ein klappbares Element (178) gekoppelt sind.

15. Elektrische Zahnbürste nach Anspruch 13, wobei der Griff (104) an eines der mindestens zwei Mundstücksegmente gekoppelt ist.

16. Elektrische Zahnbürste nach Anspruch 13, wobei das obere Mundstück und/oder das untere Mundstück weiter Borsten (174, 176) zum Reinigen von Zahnflächen umfassen.

## Revendications

1. Ensemble embout buccal (10) pour nettoyer les dents, comprenant :
un embout buccal supérieur (12) destiné à recevoir un premier ensemble de dents (14) de l'arcade dentaire maxillaire d'un utilisateur et à nettoyer simultanément plusieurs surfaces dentaires du premier ensemble de dents (14), et incluant un canal supérieur (20) présentant deux parois supérieures verticales opposées (22, 24) conçues pour s'étendre le long de surfaces latérales (28, 30) du premier ensemble de dents (14) et une paroi supérieure centrale (26) entre des surfaces horizontales en regard (32) du premier ensemble de dents (14) ;
un embout buccal inférieur (16) destiné à recevoir un second ensemble de dents (18) de l'arcade dentaire mandibulaire de l'utilisateur et à nettoyer simultanément plusieurs surfaces dentaires du second ensemble de dents (18), et incluant un canal inférieur (34) présentant deux parois inférieures verticales opposées (36, 38) conçues pour s'étendre le long de surfaces latérales (42, 44) du second ensemble de dents (18) et une paroi inférieure centrale (40) entre des surfaces horizontales en regard (46) du second ensemble de dents (18) ;
un bloc à mordre (48) logé entre l'embout buccal supérieur (12) et l'embout buccal inférieur (16) et incluant une section de bloc verticale (50) présentant une extrémité supérieure (52) s'étendant librement à travers une première ouverture (54) dans la paroi supérieure centrale (26) et configurée pour venir en prise dans au moins une dent du premier ensemble de dents (14), et une extrémité inférieure (56) s'étendant librement à travers une seconde ouverture (58) dans la paroi inférieure centrale (40) et configurée pour venir en prise dans au moins une dent du second ensemble de dents (18) ;
un mécanisme d'entraînement (64) pour entraîner le mouvement de l'embout buccal supérieur (12) et de l'embout buccal inférieur (16) pour nettoyer les surfaces dentaires ; et
dans lequel le bloc à mordre (48), la au moins une dent du premier ensemble de dents (14) et la au moins une dent du second ensemble de dents (18) créent un agencement statique par rapport au mouvement de l'embout buccal supérieur (12) et de l'embout buccal inférieur (16) lorsque l'utilisateur mord sur le bloc à mordre (48), et dans lequel le mouvement de l'embout buccal supérieur (12) et de l'embout buccal inférieur (16) entraîné par le mécanisme d'entraînement (64) est sans entrave lorsque l'utilisateur mord sur le bloc à mordre (48).

2. Ensemble embout buccal selon la revendication 1, dans lequel l'embout buccal supérieur et/ou l'embout buccal inférieur comprennent en outre des poils (74) pour nettoyer les surfaces dentaires.

3. Ensemble embout buccal selon la revendication 1, dans lequel le mécanisme d'entraînement (64) peut être activé séquentiellement pour fournir une action alternée à l'embout buccal supérieur et à l'embout buccal inférieur.

4. Ensemble embout buccal selon la revendication 1, dans lequel le bloc à mordre (48) comprend en outre un élément de séparation linguale (60) et un élément de séparation vestibulaire (62) faisant chacun saillie perpendiculairement à partir du bloc à mordre (48) dans des directions latérales opposées.

5. Ensemble embout buccal selon la revendication 1, dans lequel le mécanisme d'entraînement (64) inclut quatre vessies gonflables (66, 68, 70, 72) logées entre le bloc à mordre (48), l'embout buccal supérieur (12) et l'embout buccal inférieur (16).

6. Ensemble embout buccal selon la revendication 1, comprenant en outre :
un élément articulable (178) couplé fonctionnellement à la pluralité de segments d'embout buccal (180, 182, 184) et configuré pour permettre un mouvement d'articulation entre au moins deux de la pluralité de segments d'embout buccal (180, 182, 184) permettant à l'embout buccal supérieur (112) et à l'embout buccal inférieur (116) de s'adapter à la courbure de l'arcade dentaire.

7. Ensemble embout buccal selon la revendication 6, dans lequel l'élément articulable (178) est fonctionnellement incorporé dans le bloc à mordre (186, 188).

8. Ensemble embout buccal selon la revendication 7, dans lequel le bloc à mordre (186, 188) comprend en outre un élément de séparation linguale (160) et un élément de séparation vestibulaire (162) faisant chacun saillie perpendiculairement à partir du bloc à mordre (186, 188) dans des directions latérales opposées.

9. Ensemble embout buccal selon la revendication 7, comprenant en outre un élément diviseur (198) s'étendant dans le sens de la longueur à partir de l'élément de séparation linguale (160) et de l'élément de séparation vestibulaire (162) du bloc à mordre (148) entre l'embout buccal supérieur (112) et l'embout buccal inférieur (116).

10. Ensemble embout buccal selon la revendication 7, dans lequel le mécanisme d'entraînement (164) inclut quatre vessies gonflables (166, 168, 170, 172) logées entre le bloc à mordre (148), l'embout buccal supérieur (112) et l'embout buccal inférieur (116).

11. Ensemble embout buccal selon la revendication 6, dans lequel la pluralité de segments d'embout buccal (180, 182, 184) incluent trois segments couplés par l'intermédiaire de deux éléments articulables.

12. Ensemble embout buccal selon la revendication 6, dans lequel l'embout buccal supérieur et/ou l'embout buccal inférieur comprennent en outre des poils (174, 176) pour nettoyer les surfaces dentaires.

13. Brosse à dents électrique (100), comprenant :
une partie de manche (104) ; et
une tête de brosse (102) couplée à la partie de manche (104), la tête de brosse (102) incluant un ensemble embout buccal (110) tel que décrit dans la revendication 6.

14. Brosse à dents électrique selon la revendication 13, dans laquelle la pluralité de segments d'embout buccal (180, 182, 184) incluent au moins deux segments couplés par l'intermédiaire d'un élément articulable (178).

15. Brosse à dents électrique selon la revendication 13, dans laquelle le manche (104) est couplé à l'un des au moins deux segments d'embout buccal.

16. Brosse à dents électrique selon la revendication 13, dans laquelle l'embout buccal supérieur et/ou l'embout inférieur comprennent en outre des poils (174, 176) pour nettoyer les surfaces dentaires.
